# EUROPEAN PATENT APPLICATION

(11) **EP 4 848 459 A1**
(43) Date of publication of application: **02.12.2026**
(21) Application number: 25866522.3
(22) Date of filing: 05.09.2025
(51) Int. Cl.: H01M 50/507, H01M 50/249, H01R 25/14

(54) **BATTERY PACK AND VEHICLE COMPRISING SAME**

(30) Priority: 12.09.2024 KR 20240125116
(71) Applicant: LG Energy Solution, Ltd., Seoul 07335 (KR)
(72) Inventor: LEE, Yong-Ho, Daejeon 34122 (KR); PARK, Jong-Sun, Daejeon 34122 (KR); AHN, Jun-Young, Daejeon 34122 (KR); JEONG, Eui-Cheol, Daejeon 34122 (KR); JUNG, In-Hyuk, Daejeon 34122 (KR); CHUNG, Jae-Hun, Daejeon 34122 (KR); JO, Yong-Hyuck, Daejeon 34122 (KR); YANG, Jin-Oh, Daejeon 34122 (KR)
(74) Representative: Goddar, Heinz J.
(86) International application number: PCT/KR2025/013734
(87) International publication number: WO 2026/059226

(57) **Abstract**

Disclosed is a battery pack having an improved lifespan by improving current deviation. The battery pack includes a plurality of battery cells; and a bus bar assembly electrically connected to the plurality of battery cells at one side of the plurality of battery cells and formed to have at least one of a predetermined width and a predetermined angle that are preset to enable uniform current distribution among the plurality of battery cells.

## Description

### TECHNICAL FIELD

The present disclosure relates to a battery pack and a vehicle including the battery pack, and more particularly, to a battery pack having an improved lifespan by improving current deviation and a vehicle including the battery pack.

This application is based on and claims priority from Korean Patent Application No. 10-2024-0125116, filed on September 12, 2024, with the Korean Intellectual Property Office, the disclosure of which is incorporated herein in its entirety by reference.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

Recently, medium and large battery packs applied to electric vehicles, etc., are configured to include a large number of battery cells to increase output and/or capacity, and the plurality of battery cells are electrically connected through a bus bar assembly. When a plurality of battery cells are electrically connected through a bus bar assembly, if a current deviation occurs depending on the current path configuration, the current is concentrated on a specific battery cell, which causes a problem in that the lifespan of the battery pack is rapidly reduced. To prevent this, it is necessary to design a bus bar assembly that may minimize the current deviation when electrically connecting a plurality of battery cells and ensure a uniform current distribution among the battery cells.

Therefore, when electrically connecting a plurality of battery cells, it is necessary to find a way to improve the lifespan of a battery pack by constructing a bus bar assembly that may minimize the current deviation of the battery cells.

### DISCLOSURE

### Technical Problem

Therefore, the present disclosure is directed to providing a battery pack having a bus bar assembly capable of minimizing current deviation of battery cells, and a vehicle including the same.

In addition, the present disclosure is also directed to providing a battery pack that may increase the lifespan of battery cells and reduce temperature deviation, and a vehicle including the same.

Moreover, the present disclosure is also directed to providing a battery pack that may increase an available capacity of the battery pack and improve the lifespan of the battery pack, and a vehicle including the same.

However, the technical problems that the present disclosure seeks to solve are not limited to the above, and other problems not mentioned herein will be clearly understood by those skilled in the art from the following description.

### Technical Solution

In one aspect of the present disclosure, there is provided a battery pack comprising: a plurality of battery cells; and a bus bar assembly electrically connected to the plurality of battery cells at one side of the plurality of battery cells and formed to have at least one of a predetermined width and a predetermined angle that are preset to enable uniform current distribution among the plurality of battery cells.

Also, preferably, the bus bar assembly may include a two-way connection bus bar connected to electrodes of the battery cells at both sides in a width direction of the bus bar assembly; and a one-way connection bus bar connected to the electrodes of the battery cells at one side in the width direction of the bus bar assembly, and the two-way connection bus bar may be configured to have at least one of the predetermined width and the predetermined angle so as to uniformly distribute current to each battery cell connected at both sides in the width direction of the bus bar assembly.

Also, preferably, the two-way connection bus bar may include a bus bar body formed with a predetermined length along a longitudinal direction of the bus bar assembly; a plurality of first electrode connection portions formed on the bus bar body and spaced apart from each other by a predetermined distance along the longitudinal direction of the bus bar assembly; and a plurality of second electrode connection portions formed on the bus bar body and spaced apart from each other by a predetermined distance along the longitudinal direction of the bus bar assembly, and each of the first electrode connection portions and each of the second electrode connection portions may be connected to the bus bar body with a predetermined separation distance such that current between the first electrode connection portion and the second electrode connection portion is uniformly distributed.

Also, preferably, the bus bar body may have the predetermined width in the width direction of the bus bar assembly.

Also, preferably, the predetermined width may be 10 mm.

Also, preferably, at least one of the plurality of first electrode connection portions and the plurality of second electrode connection portions may be formed to be inclined at the predetermined angle from the bus bar body.

Also, preferably, the predetermined angle may be 30 degrees.

Also, preferably, the plurality of first electrode connection portions and the plurality of second electrode connection portions may be formed to be inclined at the same angle from the bus bar body.

Also, preferably, the plurality of first electrode connection portions and the plurality of second electrode connection portions may be arranged in a straight line with the bus bar body interposed therebetween.

Also, preferably, the plurality of first electrode connection portions and the plurality of second electrode connection portions may be arranged diagonally with the bus bar body interposed therebetween.

Also, preferably, the plurality of first electrode connection portions may be formed in a row on the bus bar body.

Also, preferably, the plurality of second electrode connection portions may be formed to be inclined at the predetermined angle from the plurality of first electrode connection portions.

Also, preferably, at least one of the plurality of first electrode connection portions and the plurality of second electrode connection portions may have a bent structure.

Also, preferably, the plurality of first electrode connection portions may be formed by bending once from the bus bar body.

Also, preferably, a bending angle of the bent structure may be 90 degrees.

In addition, the present disclosure also provides a vehicle, comprising at least one battery pack according to the former embodiments.

### Advantageous Effects

According to various embodiments as described above, it is possible to provide a battery pack having a bus bar assembly capable of minimizing current deviation of battery cells, and a vehicle including the same.

In addition, according to various embodiments as described above, it is possible to provide a battery pack that may increase the lifespan of battery cells and reduce temperature deviation, and a vehicle including the same.

Moreover, according to various embodiments as described above, it is possible to provide a battery pack that may increase an available capacity of the battery pack and improve the lifespan of the battery pack, and a vehicle including the same.

Moreover, various other additional effects may be achieved by various embodiments of the present disclosure. The various effects of the present disclosure will be explained in detail in each embodiment, or the effects that can be easily understood by those skilled in the art will not be described herein.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is a schematic plan view showing main components of the battery pack of FIG. 1.
FIG. 3 is a drawing for illustrating a two-way connection bus bar of a bus bar assembly of the battery pack of FIG. 2.
FIG. 4 is a drawing for illustrating an improvement in current deviation through the two-way connection bus bar of FIG. 3.
FIG. 5 is a drawing for illustrating a bus bar assembly according to another embodiment of the present disclosure.
FIG. 6 is a drawing for illustrating a two-way connection bus bar of the bus bar assembly of FIG. 2.
FIG. 7 is a drawing for illustrating an improvement in current deviation through the two-way connection bus bar of FIG. 6.
FIG. 8 is a drawing for illustrating a bus bar assembly according to still another embodiment of the present disclosure.
FIG. 9 is a drawing for illustrating a two-way connection bus bar of the bus bar assembly of FIG. 8.
FIG. 10 is a drawing for illustrating an improvement in current deviation through the two-way connection bus bar of FIG. 9.
FIG. 11 is a drawing for illustrating a bus bar assembly according to still another embodiment of the present disclosure.
FIG. 12 is a drawing for illustrating a two-way connection bus bar of the bus bar assembly of FIG. 11.
FIG. 13 is a drawing for illustrating an improvement in current deviation through the two-way connection bus bar of FIG. 12.
FIG. 14 is a drawing for illustrating a bus bar assembly according to still another embodiment of the present disclosure.
FIG. 15 is a drawing for illustrating a two-way connection bus bar of the bus bar assembly of FIG. 14.
FIG. 16 is a drawing for illustrating an improvement in current deviation through the two-way connection bus bar of FIG. 15.
FIG. 17 is a drawing for illustrating a bus bar assembly according to still another embodiment of the present disclosure.
FIG. 18 is a drawing for illustrating a two-way connection bus bar of the bus bar assembly of FIG. 17.
FIG. 19 is a drawing for illustrating an improvement in current deviation through the two-way connection bus bar of FIG. 18.
FIG. 20 is a drawing for illustrating a bus bar assembly according to still another embodiment of the present disclosure.
FIG. 21 is a drawing for illustrating a two-way connection bus bar of the bus bar assembly of FIG. 20.
FIG. 22 is a drawing for illustrating an improvement in current deviation through the two-way connection bus bar of FIG. 21.
FIG. 23 is a drawing for illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art these terms may vary depending on the location of a target object or the location of an observer.

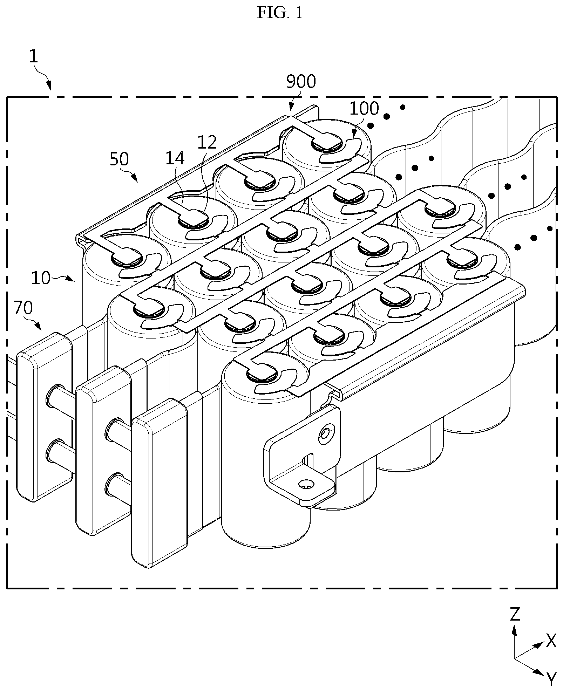

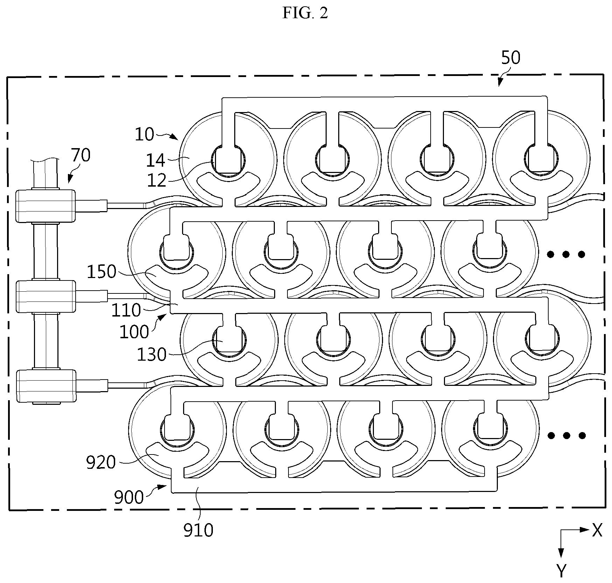

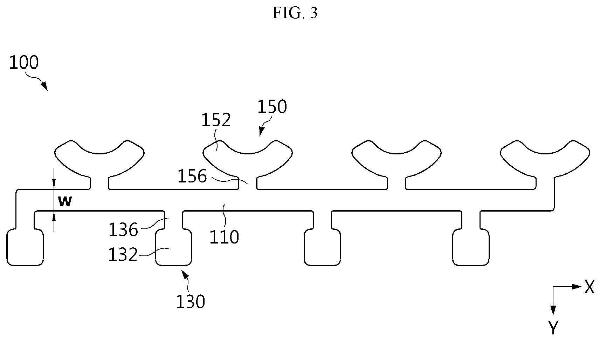

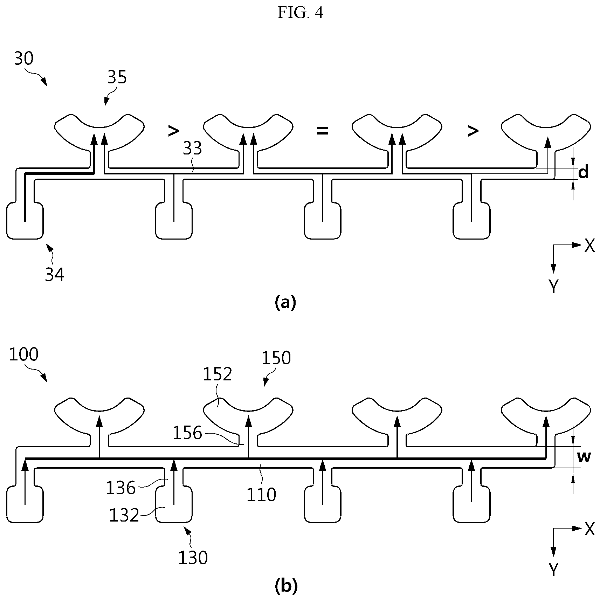

FIG. 1 is a diagram for illustrating a battery pack according to an embodiment of the present disclosure, FIG. 2 is a schematic plan view showing main components of the battery pack of FIG. 1, FIG. 3 is a drawing for illustrating a two-way connection bus bar of a bus bar assembly of the battery pack of FIG. 2, and FIG. 4 is a drawing for illustrating an improvement in current deviation through the two-way connection bus bar of FIG. 3.

Referring to FIGS. 1 to 4, the battery pack 1 may include a plurality of battery cells 10 and a bus bar assembly 50.

The plurality of battery cells 10 may be provided as secondary batteries, and may be a cylindrical secondary battery, a pouch-shaped secondary battery, or a square secondary battery. Hereinafter, in this embodiment, the plurality of battery cells 10 are described as being provided as cylindrical secondary batteries.

The bus bar assembly 50 is for electrical connection of the plurality of battery cells 10 and may be arranged at one side of the plurality of battery cells 10. Specifically, the bus bar assembly 50 is arranged at the upper side (+Z-axis direction) of the plurality of battery cells 10 and may be electrically connected to the plurality of battery cells 10 in one direction.

The bus bar assembly 50 may be formed to have at least one of a predetermined width and a predetermined angle that are preset to enable uniform current distribution among the plurality of battery cells 10. The bus bar assembly 50 is connected to electrodes 12, 14 of the plurality of battery cells 10 for the electrical connection, and may enable uniform current distribution among the plurality of battery cells 10 to minimize current deviation among the plurality of battery cells 10.

In the case of electrical connection of the plurality of battery cells 10 through the bus bar assembly 50, current may be concentrated toward a specific battery cell 10 among the plurality of battery cells 10. Due to this current concentration, there is a problem in that the lifespan of the battery pack 1 is rapidly reduced when a current deviation occurs among the plurality of battery cells 10.

The bus bar assembly 50 according to this embodiment is formed to have at least one of a predetermined width and a predetermined angle that may uniformly guide the current distribution of the plurality of battery cells 10, thereby minimizing the current deviation of the plurality of battery cells 10.

Therefore, in this embodiment, when the plurality of battery cells 10 and the bus bar assembly 50 are electrically connected, the current deviation of the plurality of battery cells 10 may be minimized, thereby increasing the lifespan of the battery cells 10 and further increasing the lifespan of the battery pack 1.

In addition, in this embodiment, the available capacity of the battery pack 1 may also be secured through improvement of the current deviation.

Moreover, in this embodiment, the temperature deviation among the plurality of battery cells 10 may also be reduced through the improvement of the current deviation.

Hereinafter, the bus bar assembly 50 according to this embodiment will be described in more detail.

The bus bar assembly 50 may include a two-way connection bus bar 100 and a one-way connection bus bar 900.

The two-way connection bus bar 100 may be provided in plurality. The plurality of two-way connection bus bars 100 may be spaced apart from each other by a predetermined distance in the width direction (Y-axis direction) of the bus bar assembly 50. In addition, the plurality of two-way connection bus bars 100 may be spaced apart from each other by a predetermined distance in the longitudinal direction (X-axis direction) of the bus bar assembly 50. The plurality of two-way connection bus bars 100 may be arranged between the one-way connection bus bars 900, explained later, in the width direction (Y-axis direction) of the bus bar assembly 50.

The one-way connection bus bar 900 may be provided in plurality. The plurality of one-way connection bus bars 900 may be arranged at the outermost sides (+Y-axis and - Y-axis directions) in the width direction (Y-axis direction) of the battery cells 10. In addition, the plurality of one-way connection bus bars 900 may be arranged to be spaced apart from each other by a predetermined distance in the longitudinal direction (X-axis direction) of the bus bar assembly 50.

The one-way connection bus bar 900 may be connected to the electrodes 12, 14 of the battery cells at one side (+Y-axis direction or -Y-axis direction) in the width direction (Y-axis direction) of the bus bar assembly. The one-way connection bus bar 900 may be connected to electrodes 12, 14 having the same polarity among the electrodes 12, 14 of the battery cells at one side (+Y-axis direction or -Y-axis direction) in the width direction (Y-axis direction) of the bus bar assembly.

The two-way connection bus bar 100 may be connected to the electrodes 12, 14 of the battery cells 10, respectively, at both sides (+Y-axis direction and -Y-axis direction) in the width direction (Y-axis direction) of the bus bar assembly 50. The two-way connection bus bar 100 may be connected to all of the electrodes 12, 14 of the battery cells 10 having different polarities at both sides (+Y-axis direction and -Y-axis direction) in the width direction (Y-axis direction) of the bus bar assembly 50. Specifically, the two-way connection bus bar 100 may be connected to the electrodes 12 of the plurality of battery cells 10 having the same polarity at one side (+Y-axis direction) in the width direction. Also, at the other side (-Y-axis direction) in the width direction, the two-way connection bus bar 100 may be connected to the electrodes 14 of the plurality of battery cells 10 having the same polarity, which is opposite to the polarity of the electrodes 12 of the plurality of battery cells 10 at one side (+Y-axis direction) in the width direction.

Since the two-way connection bus bar 100 is connected to all of the electrodes 12, 14 of the battery cells 10 having different polarities, there may be a relatively high possibility that current deviation may occur between the battery cells 10. In this embodiment, the two-way connection bus bar 100 may be configured to have at least one of the predetermined width and the predetermined angle so as to uniformly distribute current to each battery cell 10 connected at both sides in the width direction (Y-axis direction) of the bus bar assembly.

Hereinafter, the two-way connection bus bar 100 will be described in more detail.

The two-way connection bus bar 100 may include a bus bar body 110, a plurality of first electrode connection portions 130, and a plurality of second electrode connection portions 150.

The bus bar body 110 may be formed to a predetermined length along the longitudinal direction (X-axis direction) of the bus bar assembly 50. The bus bar body 100 may be made of a metal material.

The plurality of first electrode connection portions 130 may be formed at one side (+Y-axis direction) in the width direction (Y-axis direction) of the bus bar body 110. The plurality of first electrode connection portions 130 may be formed integrally with the bus bar body 110. The plurality of first electrode connection portions 130 may be spaced apart from each other by a predetermined distance along the longitudinal direction (X-axis direction) of the bus bar assembly 50.

The plurality of first electrode connection portions 130 may be connected to the first electrodes 12 having the first polarity among the electrodes 12 and 14 of the battery cells 10. Here, the first electrodes 12 having the first polarity of the battery cells 10 may be positive electrodes 12.

The plurality of second electrode connection portions 150 may be formed at the other side (-Y-axis direction) in the width direction (Y-axis direction) of the bus bar body 110. The plurality of second electrode connection portions 150 may be formed integrally with the bus bar body 110. The plurality of second electrode connection portions 150 may be spaced apart from each other by a predetermined distance along the longitudinal direction (X-axis direction) of the bus bar assembly 50, and may be arranged alternately with the plurality of first electrode connection portions 130 along the longitudinal direction (-axis direction) of the bus bar assembly 50. In other words, the plurality of first electrode connection portions 130 and the plurality of second electrode connection portions 150 may be arranged in a zigzag form along the longitudinal direction (X-axis direction) of the bus bar body 110.

The plurality of second electrode connection portions 150 may be connected to the electrodes 14 of the battery cells 10 having opposite polarities to the plurality of first electrode connection portions 130. For example, the plurality of second electrode connection portions 150 may be connected to the second electrodes 14 having the second polarity among the electrodes 12 and 14 of the battery cells 10. Here, the second electrodes 14 having the second polarity of the battery cells 10 may be negative electrodes 14. Meanwhile, the battery cells 10 may include an insulating gasket for electrical insulation between the first electrode 12 and the second electrode 14.

Each first electrode connection portion 130 and each second electrode connection portion 150 may be integrally connected to the bus bar body 110 so that the current between the first electrode connection portion 130 and the second electrode connection portion 150 is uniformly distributed. To this end, each first electrode connection portion 130 and each second electrode connection portion 150 may be arranged to have a predetermined separation distance preset on the bus bar body 110 so as to minimize current deviation due to the zigzag-shaped structure.

The bus bar body 110 may have a predetermined width w preset in the width direction (Y-axis direction) of the bus bar assembly 50. The predetermined width w may be a predetermined width of the bus bar assembly 50 described above. Specifically, the predetermined width w may be a predetermined width of the two-way connection bus bar 100 described above. That is, the predetermined width w may be a thickness for minimizing the current deviation.

In this embodiment, the resistance of the two-way connection bus bar 100 may be reduced by securing the area of the bus bar body 110 through the bus bar body 110 having the predetermined width w. This resistance reduction may minimize the current deviation of the two-way connection bus bar 100. Specifically, the predetermined width w of the bus bar body 110 may be approximately 10 mm.

Hereinafter, referring to FIG. 4 along with FIGS. 1 to 3 above and [Tables 1 to 4] below, the current deviation improvement structure according to the predetermined width of the bus bar assembly 50 in the battery pack 1 will be described in more detail.

First, the two-way connection bus bar 30 of the conventional bus bar assembly as shown in FIG. 4(a) may include a bus bar body 33, a plurality of first connection bus bars 34 provided at one side (+Y-axis direction) of the bus bar body 33, and a plurality of second connection bus bars 35 provided at the other side (-Y-axis direction) of the bus bar body 33. Here, the conventional bus bar body 33 may have a width (d) of approximately 7 mm.

In [Table 1] below, the applied current per cell (Applied current / Cell), the maximum current per cell (Max current / Cell), the minimum current per cell (Min current / Cell), and the coefficient of variation in the bus bar assembly structure of a conventional battery pack are shown. Also, the values of the applied current per cell (Applied current / Cell), the maximum current per cell (Max current / Cell), the minimum current per cell (Min current / Cell), and the coefficient of variation in the bus bar assembly structure of the conventional battery pack in [Table 1] below are calculated using measured values in 16 battery cells having the same arrangement structure as the battery cells shown in FIG. 2.

**[Table 1]**

| Applied current / Cell [A] | Max current / Cell [A] | Min current / Cell [A] | Coefficient of variation (standard deviation / average) [%] |
|---|---|---|---|
| 32.0 | 36.1 :Cell #13_21 (+12.7%) | 27.9 :Cell #14_21 (-12.8%) | 7.44 |

[Table 2] below shows current values measured in the bus bar assembly structure of the conventional battery pack. Specifically, Table 2 below shows measured current values of battery cells in an array structure such as the array structure of 16 battery cells shown in FIG. 2 as shown in [Table 3] and [Table 4] below.

**[Table 2]**

| | _24 | _23 | _22 | _21 |
|---|---|---|---|---|
| Cell#12 | 33.79 | 32.59 | 31.49 | 29.81 |
| Cell#13 | 27.98 | 31.17 | 33.46 | 36.05 |
| Cell#14 | 35.88 | 33.32 | 31.10 | 27.92 |
| Cell#15 | 29.44 | 31.90 | 33.04 | 34.29 |

In [Table 2] above, reference signs Cell#12 to Cell#14 may represent the vertical axis (Y-axis direction), and reference signs _25 to _21 may represent the horizontal axis (X-axis direction). Specifically, in [Table 2] above, reference sign Cell#12 represents the line of battery cells 10 arranged along the horizontal direction (X-axis direction) at the top (-Y-axis direction) in the vertical direction (Y-axis direction) of FIG. 2, and reference signs Cell#13 to Cell#14 represent the line of battery cells 10 sequentially arranged below (+Y-axis direction) the line of battery cells 10 of Cell#12 in the vertical direction (Y-axis direction), and may represent the line of battery cells 10 arranged along the horizontal direction (X-axis direction), respectively. In addition, reference sign _24 means the line of battery cells 10 arranged in a zigzag form from the leftmost (-X-axis direction) in the horizontal direction (X-axis direction) of FIG. 2 along the vertical direction (Y-axis direction), and reference signs _23 to _21 may mean the line of battery cells 10 arranged sequentially to the right (+X-axis direction) in the horizontal direction (X-axis direction) and arranged in a zigzag form along the vertical direction (Y-axis direction).

For example, in the Table 2, Cell#12_24 may refer to the battery cell 10 arranged at the left end at the top in the vertical direction (Y-axis direction) of FIG. 2, and Cell#12_21 may refer to the battery cell 10 arranged at the right end at the top in the vertical direction (Y-axis direction) of FIG. 2. In Table 2, Cell#15_23 may refer to the battery cell 10 that is positioned second from the left end among the battery cells 10 in the line of battery cells 10 that are positioned at the bottom in the vertical direction (Y-axis direction) of FIG. 2, Cell#15_22 may refer to the battery cell 10 that is positioned third from the left end, and Cell#15_21 may refer to the battery cell 10 that is positioned fourth from the left end, that is, the battery cell 10 that is positioned at the right end at the bottom in the vertical direction (Y-axis direction) of FIG. 2.

Referring to [Tables 1 and 2] above, the applied current per cell (Applied current / Cell) in the bus bar assembly structure of the conventional battery pack may be 32.0 A. Also, the maximum current per cell (Max current / Cell) may be 36.1 A. Also, the minimum current per cell (Min current / Cell) may be 27.9 A. Conventionally, the battery cell having a maximum current value (36.1 A) may be a battery cell arranged in Cell #13_21, and may have a current value (36.1 A) that is approximately +12.7% higher than the applied current value (32.0 A). Also, conventionally, the battery cell having a minimum current value (27.9 A) may be a battery cell arranged in Cell #14_21, and may have a current value (27.9 A) that is approximately -12.8% lower than the applied current value (32.0 A).

In the bus bar assembly structure of this conventional battery pack, the coefficient of variation may be 7.44%. In this embodiment, the coefficient of variation may refer to current deviation. That is, it may mean that the current deviation is larger as the coefficient of variation is larger, and the current deviation is smaller as the coefficient of variation is smaller.

**[Table 3]**

| Applied current / Cell [A] | Max current / Cell [A] | Min current / Cell [A] | Coefficient of variation (standard deviation / average) [%] |
|---|---|---|---|
| 32.0 | 35.4 :Cell #13_21 (+10.6%) | 28.7 :Cell #14_21 (-10.4%) | 6.1 |

[Table 3] above shows the applied current per cell (Applied current / Cell), the maximum current per cell (Max current / Cell), the minimum current per cell (Min current / Cell), and the coefficient of variation in the bus bar assembly structure of the battery pack according to this embodiment. The values of the applied current per cell (Applied current / Cell), the maximum current per cell (Max current / Cell), the minimum current per cell (Min current / Cell), and the coefficient of variation in the bus bar assembly structure of the battery pack according to this embodiment shown in [Table 3] above are calculated from the measured values of 16 battery cells shown in FIG. 2.

**[Table 4]**

| | _24 | _23 | _22 | _21 |
|---|---|---|---|---|
| Cell#12 | 33.36 | 32.44 | 31.57 | 30.30 |
| Cell#13 | 28.74 | 31.27 | 33.21 | 35.40 |
| Cell#14 | 35.21 | 33.12 | 31.21 | 28.68 |
| Cell#15 | 29.87 | 31.97 | 32.91 | 33.86 |

[Table 4] above shows the current values measured in the 16 battery cells 10, as the battery cells 10 shown in the FIG. 2. Referring to FIG. 4 along with FIGS. 1 to 3 and [Tables 3 and 4] above, the applied current per cell (Applied current / Cell) in the bus bar assembly 50 of the battery pack 1 according to this embodiment may be 32.0 A. Also, the maximum current per cell (Max current / Cell) may be 35.4 A. Also, the minimum current per cell (Min current / Cell) may be 28.7 A. In this embodiment, the battery cell having the maximum current value (35.4 A) is the battery cell arranged in Cell #13_21, and may have a current value (35.4 A) that is approximately +10.6% higher than the applied current value (32.0 A). Also, the battery cell having the minimum current value (28.7A) is the battery cell arranged in Cell #14_21 and may have a current value (28.7A) that is approximately - 10.4% lower than the applied current value (32.0A). In the bus bar assembly 50 of the battery pack 1 according to this embodiment, the coefficient of variation may be 6.1%.

As such, in the bus bar assembly 50 according to this embodiment, since the bus bar body 110 of the two-way connection bus bar 100 has a predetermined width w of approximately 10 mm, it may be found that the coefficient of variation is significantly reduced compared to the prior art. That is, according to this embodiment, the current deviation may be significantly improved through the width w of the bus bar body 110 that is increased compared to the prior art.

Referring to FIGS. 2 to 4 again, the plurality of first electrode connection portions 130 may include an electrode connection portion 132 and a body connection portion 136.

The electrode connection portion 132 may be connected to the first electrode 12 of the battery cells 10. Here, the electrode connection portion 132 may be connected to the first electrode 12 of the battery cells 10 through laser welding or through a medium such as a wire. The electrode connection portion 132 may be provided in a shape that roughly corresponds to the shape of the first electrode 12 so as to secure a contact area with the first electrode 12 of the battery cells 10.

The body connection portion 136 protrudes by a predetermined length toward one side (+Y-axis direction) of the bus bar body 110 and may connect the electrode connection portion 132 and the bus bar body 110.

The plurality of second electrode connection portions 150 may include an electrode connection portion 152 and a body connection portion 156.

The electrode connection portion 152 may be connected to the second electrode 14 of the battery cells 10. Here, the electrode connection portion 152 may be connected to the second electrode 14 of the battery cells 10 through laser welding or a medium such as a wire. The electrode connection portion 152 is provided in a roughly semi-elliptical shape and may be connected to one side of the edge of the second electrode 14.

The body connection portion 156 protrudes by a predetermined length toward the other side (-Y-axis direction) of the bus bar body 110 and may connect the electrode connection portion 152 and the bus bar body 110.

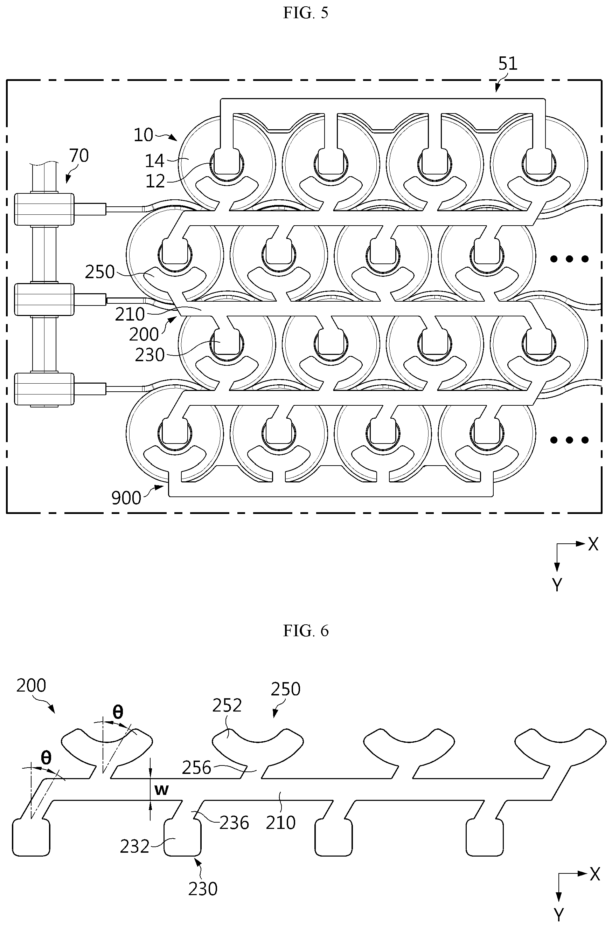

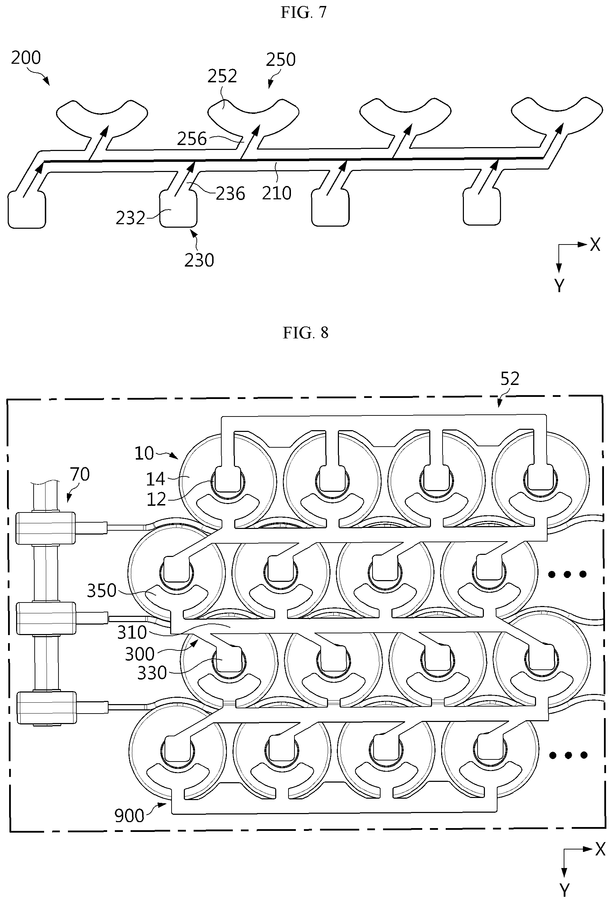

FIG. 5 is a drawing for illustrating a bus bar assembly according to another embodiment of the present disclosure, FIG. 6 is a drawing for illustrating a two-way connection bus bar of the bus bar assembly of FIG. 2, and FIG. 7 is a drawing for illustrating an improvement in current deviation through the two-way connection bus bar of FIG. 6.

The bus bar assembly 51 according to this embodiment is similar to the bus bar assembly 50 of the former embodiment, so components substantially identical or similar to those of the former embodiment will not be described again, and the following description will focus on features different from the former embodiment.

Referring to FIGS. 5 to 7, the bus bar assembly 51 may include a two-way connection bus bar 200 and a one-way connection bus bar 900. The one-way connection bus bar 900 is substantially identical as or similar to the former embodiment, and thus will not be described again.

The two-way connection bus bar 200 may include a bus bar body 210, a plurality of first electrode connection portions 230, and a plurality of second electrode connection portions 250.

The bus bar body 210 may have a predetermined width w. In this embodiment, the bus bar body 210 may have a width of approximately 7 mm.

At least one of the plurality of first electrode connection portions 230 and the plurality of second electrode connection portions 250 may be formed to be inclined at a predetermined angle (θ) from the bus bar body 210. Here, the predetermined angle (θ) may be approximately 30 degrees. The inclined structure at the predetermined angle (θ) may reduce the length of the current path and minimize resistance within the path.

The plurality of first electrode connection portions 230 and the plurality of second electrode connection portions 250 may be formed to be inclined at the same angle from the bus bar body 210. Specifically, the body connection portion 236 of the plurality of first electrode connection portions 230 and the body connection portion 256 of the plurality of second electrode connection portions 250 may be formed to be inclined at the same angle while being inclined at the predetermined angle (θ). The predetermined angle (θ) may be approximately 30 degrees.

Meanwhile, the plurality of first electrode connection portions 230 and the plurality of second electrode connection portions 250 of the two-way connection bus bars 200 facing each other in the width direction (Y-axis direction) of the bus bar assembly 51 may have inclination directions that are opposite to each other. This is for connection with the battery cells 10 according to the zigzag arrangement of the battery cells 10 in the width direction (Y-axis direction) of the battery cells 10.

Hereinafter, referring to FIGS. 5 to 7 again along with [Tables 5 and 6] below, the current deviation improvement structure of the bus bar assembly 51 according to this embodiment will be described in more detail.

**[Table 5]**

| Applied current / Cell [A] | Max current / Cell [A] | Min current / Cell [A] | Coefficient of variation (standard deviation / average) [%] |
|---|---|---|---|
| 32.0 | 35.1 :Cell #13_21 (+9.8%) | 28.9 :Cell #14_21 (-9.8%) | 5.8 |

**[Table 6]**

| | _24 | _23 | _22 | _21 |
|---|---|---|---|---|
| Cell#12 | 33.39 | 32.45 | 31.59 | 30.25 |
| Cell#13 | 28.90 | 31.43 | 33.17 | 35.14 |
| Cell#14 | 35.03 | 33.12 | 31.40 | 28.86 |
| Cell#15 | 29.88 | 31.99 | 32.89 | 33.81 |

In the bus bar assembly 51 according to this embodiment, the applied current per cell (Applied current / Cell) may be 32.0 A. Also, the maximum current per cell (Max current / Cell) may be 35.1 A. Also, the minimum current per cell (Min current / Cell) may be 28.9 A. In this embodiment, the battery cell having the maximum current value (35.1 A) is the battery cell arranged in Cell #13_21, and may have a current value (35.1 A) that is approximately +9.8% higher than the applied current value (32.0 A). Also, the battery cell having the minimum current value (28.9 A) is the battery cell arranged in Cell #14_21, and may have a current value (28.9 A) that is approximately -9.8% lower than the applied current value (32.0 A). The coefficient of variation in the bus bar assembly 51 according to this embodiment may be 5.8%.

In this way, in the bus bar assembly 51 according to this embodiment, the coefficient of variation may be significantly reduced compared to the prior art through the plurality of first electrode connection portions 230 and the plurality of second electrode connection portions 250 that are formed to be inclined at a predetermined angle (θ) from the bus bar body 210 of the two-way connection bus bar 200. That is, in this embodiment, the current deviation may be significantly improved compared to the prior art through the inclined structure of the predetermined angle (θ) of the bus bar assembly 51. In addition, in this embodiment, the current deviation may be improved without increasing the width w of the bus bar body 210 compared to the prior art, so that the manufacturing cost of the bus bar assembly 51 may be reduced while also securing price competitiveness.

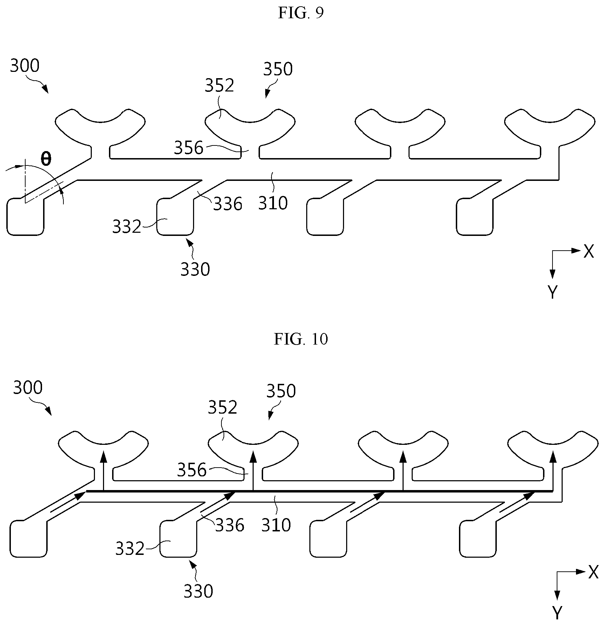

FIG. 8 is a drawing for illustrating a bus bar assembly according to still another embodiment of the present disclosure, FIG. 9 is a drawing for illustrating a two-way connection bus bar of the bus bar assembly of FIG. 8, and FIG. 10 is a drawing for illustrating an improvement in current deviation through the two-way connection bus bar of FIG. 9.

The bus bar assembly 52 according to this embodiment is similar to the bus bar assembly 51 of the former embodiment, so components substantially identical or similar to those of the former embodiment will not be described again, and the following description will focus on features different from the former embodiment.

Referring to FIGS. 8 to 10, the bus bar assembly 52 may include a two-way connection bus bar 300 and a one-way connection bus bar 900. The one-way connection bus bar 900 is substantially identical or similar to the former embodiment, and thus will not be described again.

The two-way connection bus bar 300 may include a bus bar body 310, a plurality of first electrode connection portions 330, and a plurality of second electrode connection portions 350.

One of the plurality of first electrode connection portions 330 and the plurality of second electrode connection portions 350 may be formed to be inclined at a predetermined angle (θ) from the bus bar body 310. In this embodiment, the plurality of first electrode connection portions 330 may be formed to be inclined at a predetermined angle (θ) from the bus bar body 310. That is, in this embodiment, unlike the former embodiment, only the plurality of first electrode connection portions 330 among the plurality of first electrode connection portions 330 and the plurality of second electrode connection portions 350 may be formed to be inclined at a predetermined angle (θ). Here, the predetermined angle (θ) may be approximately 60 degrees. Through this structure in which only the plurality of first electrode connection portions 330 have a larger inclination angle, the current path between the plurality of first electrode connection portions 330 and the plurality of second electrode connection portions 350 may be implemented to be shorter.

Hereinafter, referring to FIGS. 8 to 10 again along with [Tables 7 and 8] below, the current deviation improvement structure of the bus bar assembly 52 according to this embodiment will be described in more detail.

**[Table 7]**

| Applied current / Cell [A] | Max current / Cell [A] | Min current / Cell [A] | Coefficient of variation (standard deviation / average) [%] |
|---|---|---|---|
| 32.0 | 32.9 :Cell #13_21 (+2.9%) | 30.8 :Cell #13_24 (-3.8%) | 2.0 |

**[Table 8]**

| | _24 | _23 | _22 | _21 |
|---|---|---|---|---|
| Cell#12 | 32.20 | 32.03 | 31.88 | 31.55 |
| Cell#13 | 30.78 | 31.72 | 32.26 | 32.91 |
| Cell#14 | 32.81 | 32.24 | 31.74 | 30.87 |
| Cell#15 | 30.83 | 32.12 | 32.27 | 32.46 |

In the bus bar assembly 52 according to this embodiment, the applied current per cell (Applied current / Cell) may be 32.0 A. Also, the maximum current per cell (Max current / Cell) may be 32.9 A. Also, the minimum current per cell (Min current / Cell) may be 30.8 A. In this embodiment, the battery cell having the maximum current value (32.9 A) is the battery cell arranged in Cell #13_21, and may have a current value (32.9 A) that is approximately +2.9% higher than the applied current value (32.0 A). Also, the battery cell having the minimum current value (30.8 A) is the battery cell arranged in Cell #13_24, and may have a current value (30.8 A) that is approximately -3.8% lower than the applied current value (32.0 A). In the bus bar assembly 52 according to this embodiment, the coefficient of variation may be 2.0%.

In this way, in the bus bar assembly 52 according to this embodiment, since only the plurality of first electrode connection portions 330 are formed to be inclined while making the angle of inclination of the predetermined angle (θ) larger, the current path between the plurality of first electrode connection portions 330 and the plurality of second electrode connection portions 350 may be further reduced, thereby further improving the current deviation.

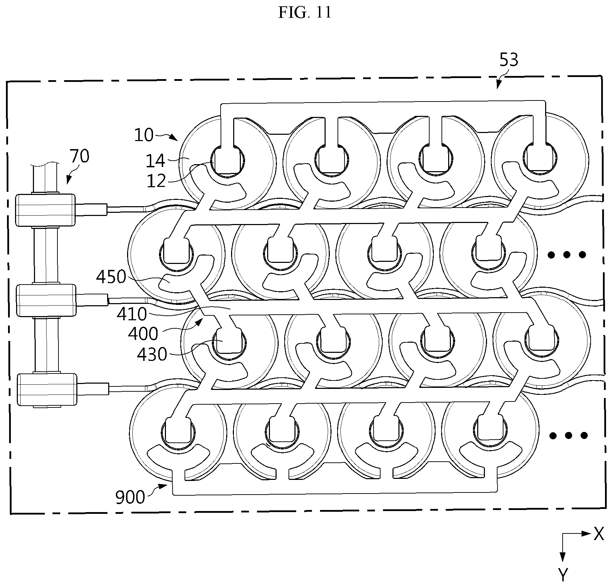

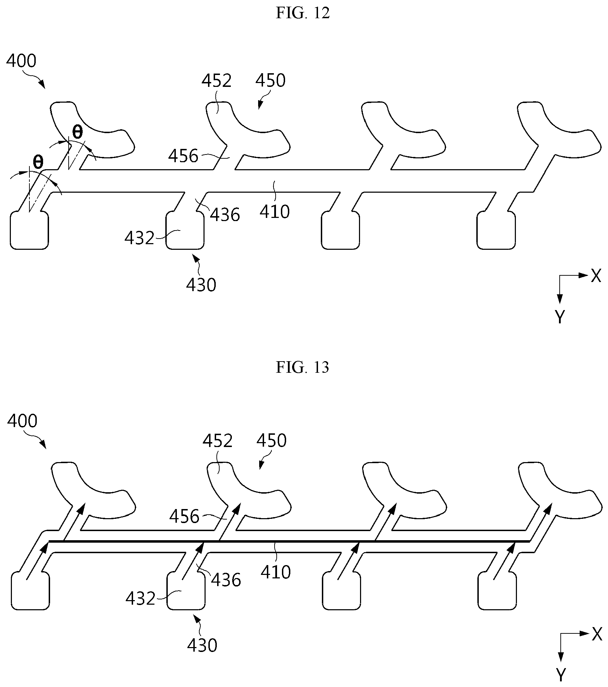

FIG. 11 is a drawing for illustrating a bus bar assembly according to still another embodiment of the present disclosure, FIG. 12 is a drawing for illustrating a two-way connection bus bar of the bus bar assembly of FIG. 11, and FIG. 13 is a drawing for illustrating an improvement in current deviation through the two-way connection bus bar of FIG. 12.

The bus bar assembly 53 according to this embodiment is similar to the bus bar assembly 51 of the former embodiment, so components substantially identical or similar to those of the former embodiment will not be described again, and the following description will focus on features different from the former embodiment.

Referring to FIGS. 11 to 13, the bus bar assembly 53 may include a two-way connection bus bar 400 and a one-way connection bus bar 900. The one-way connection bus bar 900 is substantially identical or similar to the former embodiment, and thus will not be described again.

The two-way connection bus bar 400 may include a bus bar body 410, a plurality of first electrode connection portions 430, and a plurality of second electrode connection portions 450.

The plurality of first electrode connection portions 430 and the plurality of second electrode connection portions 450 may be formed to be inclined at a predetermined angle (θ) from the bus bar body 410. Here, the predetermined angle (θ) may be approximately 30 degrees. This inclined structure at the predetermined angle (θ) may reduce the length of the current path and minimize resistance within the path.

The plurality of first electrode connection portions 430 and the plurality of second electrode connection portions 450 may be formed to be inclined at the same angle from the bus bar body 410. Specifically, in the case of the plurality of first electrode connection portions 430, the body connection portion 436 may be formed to be inclined at the predetermined angle (θ). In addition, in the case of the plurality of second electrode connection portions 450, both the body connection portion 456 and the electrode connection portion 452 may be formed to be inclined at the predetermined angle (θ). This inclined structure of both the body connection portion 456 and the electrode connection portion 452 of the plurality of second electrode connection portions 450 may further reduce the current path at the plurality of second electrode connection portions 450.

Hereinafter, referring to FIGS. 11 to 13 again along with [Tables 9 and 10] below, the current deviation improvement structure of the bus bar assembly 53 according to this embodiment will be described in more detail.

**[Table 9]**

| Applied current / Cell [A] | Max current / Cell [A] | Min current / Cell [A] | Coefficient of variation (standard deviation / average) [%] |
|---|---|---|---|
| 32.0 | 33.3 :Cell #13_21 (+4.0%) | 30.4 :Cell #13_24 (-4.9%) | 2.7 |

**[Table 10]**

| | _24 | _23 | _22 | _21 |
|---|---|---|---|---|
| Cell#12 | 32.51 | 32.14 | 31.82 | 31.21 |
| Cell#13 | 30.44 | 31.61 | 32.36 | 33.27 |
| Cell#14 | 33.20 | 32.35 | 31.63 | 30.48 |
| Cell#15 | 30.62 | 32.00 | 32.33 | 32.72 |

In the bus bar assembly 53 according to this embodiment, the applied current per cell (Applied current / Cell) may be 32.0 A. Also, the maximum current per cell (Max current / Cell) may be 33.3 A. Also, the minimum current per cell (Min current / Cell) may be 30.4 A. In this embodiment, the battery cell having the maximum current value (33.3 A) is the battery cell arranged in Cell #13_21, and may have a current value (33.3 A) that is approximately +4.0% higher than the applied current value (32.0 A). Also, the battery cell having the minimum current value (30.4 A) is the battery cell arranged in Cell #13_24, and may have a current value (30.4 A) that is approximately -4.9% lower than the applied current value (32.0 A). The coefficient of variation in the bus bar assembly 53 according to this embodiment may be 2.7%.

In this way, in the bus bar assembly 53 according to this embodiment, since both the body connection portion 456 and the electrode connection portion 452 of the plurality of second electrode connection portions 450 are formed to be inclined at the predetermined angle (θ), the current path at the plurality of second electrode connection portions 450 may be further reduced to improve the current deviation.

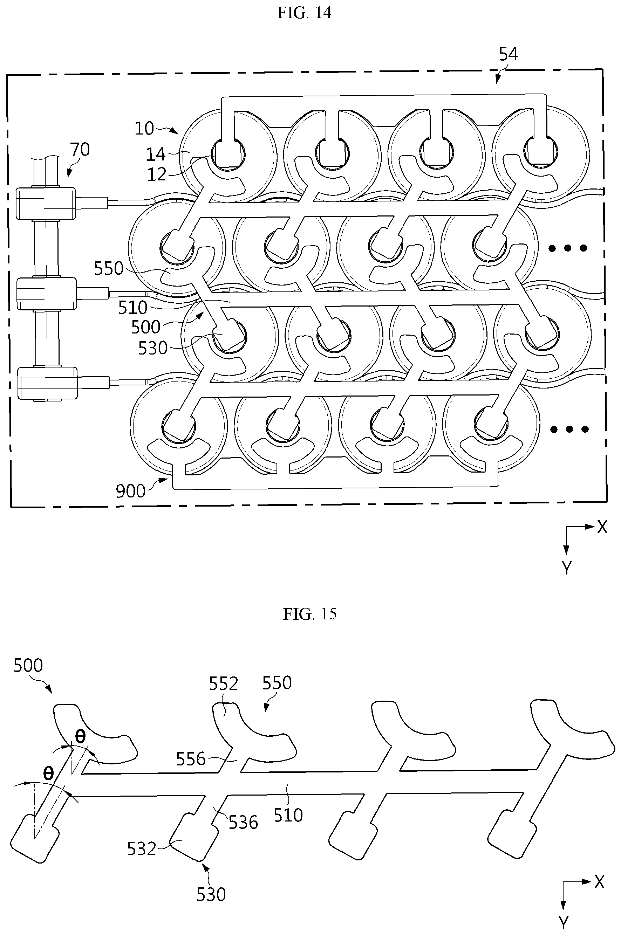

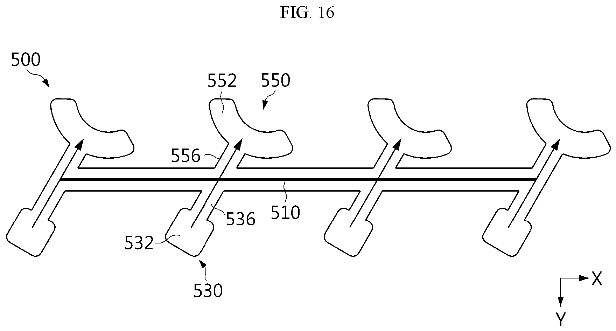

FIG. 14 is a drawing for illustrating a bus bar assembly according to still another embodiment of the present disclosure, FIG. 15 is a drawing for illustrating a two-way connection bus bar of the bus bar assembly of FIG. 14, and FIG. 16 is a drawing for illustrating an improvement in current deviation through the two-way connection bus bar of FIG. 15.

The bus bar assembly 54 according to this embodiment is similar to the bus bar assembly 53 of the former embodiment, so components substantially identical or similar to those of the former embodiment will not be described again, and the following description will focus on features different from the former embodiment.

Referring to FIGS. 14 to 16, the bus bar assembly 54 may include a two-way connection bus bar 500 and a one-way connection bus bar 900. The one-way connection bus bar 900 is substantially identical or similar to the former embodiment, and thus will not be described again.

The two-way connection bus bar 500 may include a bus bar body 510, a plurality of first electrode connection portions 530, and a plurality of second electrode connection portions 550.

The plurality of first electrode connection portions 530 and the plurality of second electrode connection portions 550 may be formed to be inclined at a predetermined angle (θ) from the bus bar body 510. Here, the predetermined angle (θ) may be approximately 30 degrees. This inclined structure at the predetermined angle (θ) may reduce the length of the current path and minimize resistance within the path.

The plurality of first electrode connection portions 530 and the plurality of second electrode connection portions 550 may be formed to be inclined at the same angle from the bus bar body 410. Specifically, in the case of the plurality of first electrode connection portions 530, both the body connection portion 536 and the electrode connection portion 532 may be formed to be inclined at the predetermined angle (θ). In addition, in the case of the plurality of second electrode connection portions 550, both the body connection portion 556 and the electrode connection portion 552 may also be formed to be inclined at the predetermined angle (θ).

Accordingly, the plurality of first electrode connection portions 530 and the plurality of second electrode connection portions 550 may be arranged in a straight line with respect to each other with the bus bar body 510 interposed therebetween. More specifically, the plurality of first electrode connection portions 530 and the plurality of second electrode connection portions 550 may be arranged in a diagonal-type straight line with respect to each other with the bus bar body 510 interposed therebetween.

The inclined structure of both the body connection portion 536 and the electrode connection portion 532 of the plurality of first electrode connection portions 530 and the inclined structure of both the body connection portion 556 and the electrode connection portion 552 of the plurality of second electrode connection portions 550 may reduce the current path at both the plurality of first electrode connection portions 530 and the plurality of second electrode connection portions 550.

Hereinafter, referring to FIGS. 14 to 16 again along with [Tables 11 and 12] below, the current deviation improvement structure of the bus bar assembly 54 according to this embodiment will be described in more detail.

**[Table 11]**

| Applied current / Cell [A] | Max current / Cell [A] | Min current / Cell [A] | Coefficient of variation (standard deviation / average) [%] |
|---|---|---|---|
| 32.0 | 32.7 :Cell #13_21 (+2.2%) | 31.0 :Cell #13_24 (-3.1%) | 1.6 |

**[Table 12]**

| | _24 | _23 | _22 | _21 |
|---|---|---|---|---|
| Cell#12 | 32.14 | 32.03 | 31.94 | 31.58 |
| Cell#13 | 31.00 | 31.79 | 32.23 | 32.72 |
| Cell#14 | 32.61 | 32.20 | 31.82 | 31.08 |
| Cell#15 | 31.00 | 32.13 | 32.25 | 32.36 |

In the bus bar assembly 54 according to this embodiment, the applied current per cell (Applied current / Cell) may be 32.0 A. Also, the maximum current per cell (Max current / Cell) may be 32.7 A. Also, the minimum current per cell (Min current / Cell) may be 31.0 A. In this embodiment, the battery cell having the maximum current value (32.7 A) is the battery cell arranged in Cell #13_21, and may have a current value (32.7 A) that is approximately +2.2% higher than the applied current value (32.0 A). Also, the battery cell having the minimum current value (31.0 A) is the battery cell arranged in Cell #13_24, and may have a current value (31.0 A) that is approximately -3.1% lower than the applied current value (32.0 A). The coefficient of variation in the bus bar assembly 54 according to this embodiment may be 1.6%.

In this way, in the bus bar assembly 54 according to this embodiment, since both the body connection portion 536 and the electrode connection portion 532 of the plurality of first electrode connection portions 530 and both the body connection portion 556 and the electrode connection portion 552 of the plurality of second electrode connection portions 550 are formed to be inclined at the predetermined angle (θ), the current path at both the plurality of first electrode connection portions 530 and the plurality of second electrode connection portions 550 is further reduced to minimize resistance within the path, thereby further improving the current deviation.

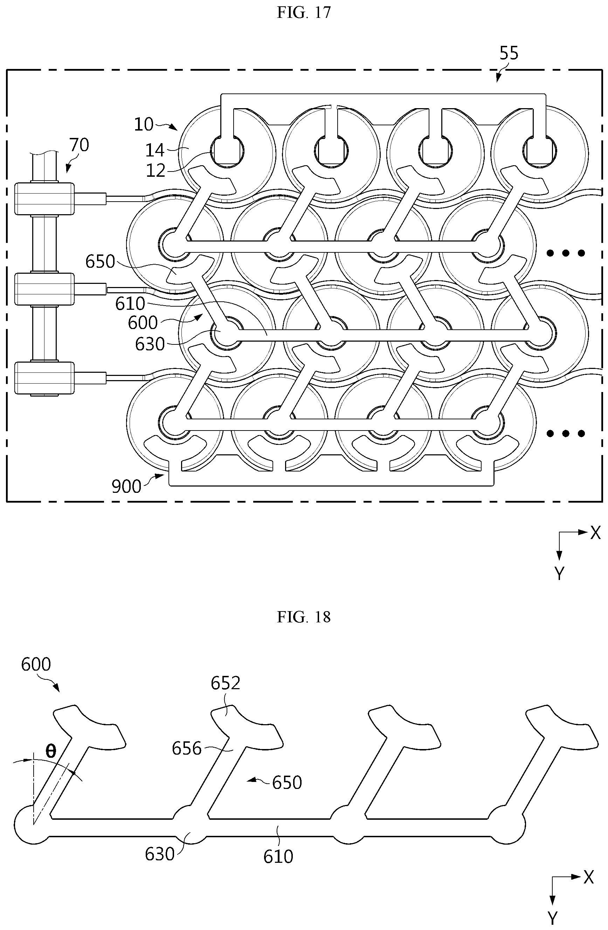

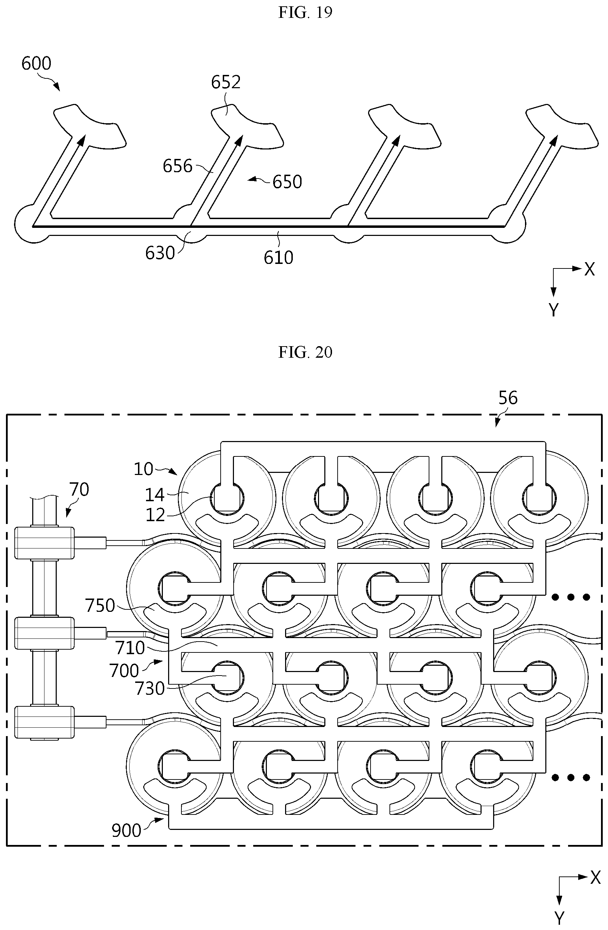

FIG. 17 is a drawing for illustrating a bus bar assembly according to still another embodiment of the present disclosure, FIG. 18 is a drawing for illustrating a two-way connection bus bar of the bus bar assembly of FIG. 17, and FIG. 19 is a drawing for illustrating an improvement in current deviation through the two-way connection bus bar of FIG. 18.

The bus bar assembly 55 according to this embodiment is similar to the bus bar assembly 54 of the former embodiment, so components substantially identical or similar to those of the former embodiment will not be described again, and the following description will focus on features different from the former embodiment.

Referring to FIGS. 17 to 19, the bus bar assembly 55 may include a two-way connection bus bar 600 and a one-way connection bus bar 900. The one-way connection bus bar 900 is substantially identical or similar to the former embodiment, and thus will not be described again.

The two-way connection bus bar 600 may include a bus bar body 610, a plurality of first electrode connection portions 630, and a plurality of second electrode connection portions 650.

The plurality of first electrode connection portions 630 may be formed in a row on the bus bar body 610. The plurality of first electrode connection portions 630 may be spaced apart from each other by a predetermined distance along the longitudinal direction (X-axis direction) of the bus bar body 610.

The plurality of second electrode connection portions 650 may be formed to be inclined at a predetermined angle (θ) from the plurality of first electrode connection portions 630. The predetermined angle (θ) may be approximately 30 degrees.

The plurality of second electrode connection portions 650 may include an electrode connection portion 652, and a body connection portion 656 that connects the electrode connection portion 652 and the plurality of first electrode connection portions 630. Both the body connection portion 656 and the electrode connection portion 652 of the plurality of second electrode connection portions 550 may be formed to be inclined at the predetermined angle (θ).

In this embodiment, the plurality of first electrode connection portions 630 are formed in a row on the bus bar body 610 along the longitudinal direction (X-axis direction) of the bus bar body 610, thereby further shortening the current path.

Hereinafter, referring to FIGS. 17 to 19 again along with [Tables 13 and 14] below, the current deviation improvement structure of the bus bar assembly 55 according to this embodiment will be described in more detail.

**[Table 13]**

| Applied current / Cell [A] | Max current / Cell [A] | Min current / Cell [A] | Coefficient of variation (standard deviation / average) [%] |
|---|---|---|---|
| 32.0 | 32.4 :Cell #15_23 (+1.3%) | 31.3 :Cell #15_24 (-2.3%) | 0.8 |

**[Table 14]**

| | _24 | _23 | _22 | _21 |
|---|---|---|---|---|
| Cell#12 | 31.86 | 31.92 | 31.98 | 31.92 |
| Cell#13 | 31.73 | 32.04 | 32.17 | 32.04 |
| Cell#14 | 31.96 | 32.11 | 32.01 | 31.70 |
| Cell#15 | 31.26 | 32.40 | 32.33 | 32.02 |

In the bus bar assembly 55 according to this embodiment, the applied current per cell (Applied current / Cell) may be 32.0 A. Also, the maximum current per cell (Max current / Cell) may be 32.4 A. Also, the minimum current per cell (Min current / Cell) may be 31.3 A. In this embodiment, the battery cell having the maximum current value (32.4 A) is the battery cell arranged in Cell #15_23, and may have a current value (32.4 A) that is approximately +1.3% higher than the applied current value (32.0 A). Also, the battery cell having the minimum current value (31.3 A) is the battery cell arranged in Cell #15_24, and may have a current value (31.3 A) that is approximately -2.3% lower than the applied current value (32.0 A). In the bus bar assembly 55 according to this embodiment, the coefficient of variation may be 0.8%.

In this way, in the bus bar assembly 55 according to this embodiment, the plurality of first electrode connection portions 630 are formed in a row on the bus bar body 610 along the longitudinal direction (X-axis direction) of the bus bar body 610, thereby further shortening the current path and further improving the current deviation.

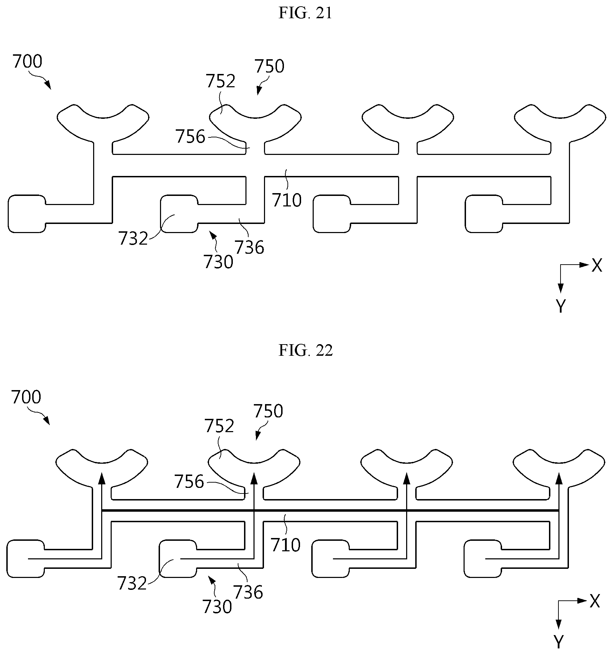

FIG. 20 is a drawing for illustrating a bus bar assembly according to still another embodiment of the present disclosure, FIG. 21 is a drawing for illustrating a two-way connection bus bar of the bus bar assembly of FIG. 20, and FIG. 22 is a drawing for illustrating an improvement in current deviation through the two-way connection bus bar of FIG. 21.

The bus bar assembly 56 according to this embodiment is similar to the bus bar assembly 50 of the former embodiment, so components substantially identical or similar to those of the former embodiment will not be described again, and the following description will focus on features different from the former embodiment.

Referring to FIGS. 20 to 22, the bus bar assembly 56 may include a two-way connection bus bar 700 and a one-way connection bus bar 900. The one-way connection bus bar 900 is substantially identical or similar to the former embodiment, and thus will not be described again.

The two-way connection bus bar 700 may include a bus bar body 710, a plurality of first electrode connection portions 730, and a plurality of second electrode connection portions 750.

A bent structure may be formed in at least one of the plurality of first electrode connection portions 730 and the plurality of second electrode connection portions 750. In this embodiment, the bent structure may be formed in the plurality of first electrode connection portions 730. The bent structure of the plurality of first electrode connection portions 730 may be formed by bending the bus bar body 710 once. The bending angle of the bent structure may be 90 degrees.

Through the bent structure of the plurality of first electrode connection portions 730, the current path passing through both sides (+Y-axis direction and -Y-axis direction) in the width direction (Y-axis direction) of the bus bar body 710 may be straightened to correspond to the width of the bus bar body 710. In other words, by straightening the current path between the end (-Y-axis direction) of the body connection portion 736 opposite to the electrode connection portion 732 of the plurality of first electrode connection portions 730, one end (+Y-axis direction) in the width direction of the bus bar body 710, the other end (-Y-axis direction) in the width direction of the bus bar body 710, and the end (+Y-axis direction) of the body connection portion 756 opposite to the electrode connection portion 752 of the plurality of second electrode connection portions 756, the current path when passing through the bus bar body 710 may be optimized in the width direction (Y-axis direction) of the bus bar body 710.

Hereinafter, referring to FIGS. 20 to 22 again along with [Tables 15 and 16] below, the current deviation improvement structure of the bus bar assembly 56 according to this embodiment will be described in more detail.

**[Table 15]**

| Applied current / Cell [A] | Max current / Cell [A] | Min current / Cell [A] | Coefficient of variation (standard deviation / average) [%] |
|---|---|---|---|
| 32.0 | 32.4 :Cell #15_23 (+1.3%) | 31.7 :Cell #12_24 (-0.9%) | 0.5 |

**[Table 16]**

| | _24 | _23 | _22 | _21 |
|---|---|---|---|---|
| Cell#12 | 31.71 | 31.90 | 32.04 | 32.02 |
| Cell#13 | 32.04 | 32.17 | 32.21 | 32.10 |
| Cell#14 | 31.94 | 32.09 | 32.10 | 32.00 |
| Cell#15 | 31.72 | 32.40 | 32.29 | 32.09 |

In the bus bar assembly 56 according to this embodiment, the applied current per cell (Applied current / Cell) may be 32.0 A. Also, the maximum current per cell (Max current / Cell) may be 32.4 A. Also, the minimum current per cell (Min current / Cell) may be 31.7 A. In this embodiment, the battery cell having the maximum current value (32.4 A) is the battery cell arranged in Cell #15_23, and may have a current value (32.4 A) that is approximately +1.3% higher than the applied current value (32.0 A). Also, the battery cell having the minimum current value (31.7 A) is the battery cell arranged in Cell #12_24, and may have a current value (31.7 A) that is approximately -0.9% lower than the applied current value (32.0 A). In the bus bar assembly 56 according to this embodiment, the coefficient of variation may be 0.5%.

In this way, in the bus bar assembly 56 according to this embodiment, the current deviation may be further improved by optimizing the current path when passing through the bus bar body 710 in the width direction (Y-axis direction) of the bus bar body 710.

Referring to FIGS. 1 and 2 again, the one-way connection bus bar 900 may include a bus bar body 910 and an electrode connection portion 920.

The bus bar body 910 may be made of a metal material having a predetermined length and width.

The electrode connection portion 920 is formed to protrude from the bus bar body 910 and may be provided in plurality. The plurality of electrode connection portions 920 may be connected to the electrodes 12, 14 having the same polarity among the electrodes 12, 14 of the battery cells 10.

The bus bar assembly 50 may further include a pair of bus bar covers provided at the upper and lower sides of the one-way connection bus bar 900 and the two-way connection bus bar 100. The pair of bus bar covers may contain an insulating material, for example, may be made of a polyimide film. The pair of bus bar covers may have at least one opening for guiding an electrical connection between the one-way connection bus bar 900 and the two-way connection bus bar 100 and the battery cells 10.

Meanwhile, the battery pack 1 may also be configured to include at least one of the bus bar assemblies 51 to 56 of the former embodiments. In addition, the battery pack 1 may also be configured, depending on the design, to include the two-way connection bus bars as a combination of at least one of the two-way connection bus bars 100, 200, 300, 400, 500, 600, 700 of the bus bar assemblies 50 to 56.

In addition, the battery pack 1 may further include a cooling tube 70.

The cooling tube 70 is formed long to have a predetermined length for cooling the plurality of battery cells 10 and may be provided between the plurality of battery cells 10. The cooling tube 70 may be provided in plurality.

The plurality of cooling tubes 70 may be provided to be in contact with the outer surface of the plurality of battery cells 10 to enhance cooling performance. The plurality of cooling tubes 70 may have a cooling channel for a cooling medium to flow. In addition, the plurality of cooling tubes 70 may be connected to a cooling device or the like to circulate the cooling medium. The cooling medium may be provided as a cooling fluid. In this embodiment, the cooling fluid may be provided as water, and may include one or more fluids capable of exchanging heat with the surrounding environment in addition to water.

The battery pack 1 may include a pack case (not shown).

The pack case may accommodate the aforementioned components that constitute the battery pack 1, including the cooling tube 70. For this purpose, a predetermined accommodation space may be provided in the pack case.

Also, the battery pack 1 may include an electric unit.

The electric unit is provided in the pack case and may include electric components such as a BMS for controlling the battery pack 10. The electric unit may further include components such as a current sensor, a fuse, and a service plug.

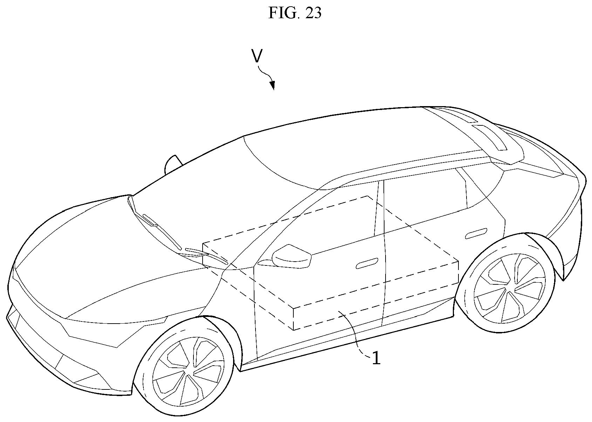

FIG. 23 is a drawing for illustrating a vehicle according to an embodiment of the present disclosure.

Referring to FIG. 23, the vehicle V according to an embodiment of the present disclosure may include at least one battery pack 1 according to the present disclosure. In addition to the battery pack 1, the vehicle V according to an embodiment of the present disclosure may further include various other components included in a vehicle. For example, the vehicle V according to an embodiment of the present disclosure may further include a body, a motor, a control device such as an ECU (electronic control unit), etc., in addition to the battery pack 1 according to an embodiment of the present disclosure.

In addition, the battery pack 1 according to an embodiment of the present disclosure may be provided to other devices, instruments, and equipment, such as an energy storage device (ESS) that uses secondary batteries, in addition to the vehicle V.

According to various embodiments as described above, it is possible to provide a battery pack 1 having a bus bar assembly 50, 51, 52, 53, 54, 55, 56 capable of minimizing current deviation of battery cells, and a vehicle V including the same.

In addition, according to various embodiments as described above, it is possible to provide a battery pack 1 that may increase the lifespan of battery cells 10 and reduce temperature deviation, and a vehicle V including the same.

Moreover, according to various embodiments as described above, it is possible to provide a battery pack 1 that may increase an available capacity of the battery pack 1 and improve the lifespan of the battery pack 1, and a vehicle V including the same.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a plurality of battery cells; and
a bus bar assembly electrically connected to the plurality of battery cells at one side of the plurality of battery cells and formed to have at least one of a predetermined width and a predetermined angle that are preset to enable uniform current distribution among the plurality of battery cells.

2. The battery pack according to claim 1,
wherein the bus bar assembly includes:
a two-way connection bus bar connected to electrodes of the battery cells at both sides in a width direction of the bus bar assembly; and
a one-way connection bus bar connected to the electrodes of the battery cells at one side in the width direction of the bus bar assembly,
wherein the two-way connection bus bar is configured to have at least one of the predetermined width and the predetermined angle so as to uniformly distribute current to each battery cell connected at both sides in the width direction of the bus bar assembly.

3. The battery pack according to claim 2,
wherein the two-way connection bus bar includes:
a bus bar body formed with a predetermined length along a longitudinal direction of the bus bar assembly;
a plurality of first electrode connection portions formed on the bus bar body and spaced apart from each other by a predetermined distance along the longitudinal direction of the bus bar assembly; and
a plurality of second electrode connection portions formed on the bus bar body and spaced apart from each other by a predetermined distance along the longitudinal direction of the bus bar assembly,
wherein each of the first electrode connection portions and each of the second electrode connection portions are connected to the bus bar body with a predetermined separation distance such that current between the first electrode connection portion and the second electrode connection portion is uniformly distributed.

4. The battery pack according to claim 3,
wherein the bus bar body has the predetermined width in the width direction of the bus bar assembly.

5. The battery pack according to claim 1,
wherein the predetermined width is 10 mm.

6. The battery pack according to claim 3,
wherein at least one of the plurality of first electrode connection portions and the plurality of second electrode connection portions is formed to be inclined at the predetermined angle from the bus bar body.

7. The battery pack according to claim 1,
wherein the predetermined angle is 30 degrees.

8. The battery pack according to claim 3,
wherein the plurality of first electrode connection portions and the plurality of second electrode connection portions are formed to be inclined at the same angle from the bus bar body.

9. The battery pack according to claim 3,
wherein the plurality of first electrode connection portions and the plurality of second electrode connection portions are arranged in a straight line with the bus bar body interposed therebetween.

10. The battery pack according to claim 3,
wherein the plurality of first electrode connection portions and the plurality of second electrode connection portions are arranged diagonally with the bus bar body interposed therebetween.

11. The battery pack according to claim 3,
wherein the plurality of first electrode connection portions are formed in a row on the bus bar body.

12. The battery pack according to claim 3, wherein the plurality of second electrode connection portions are formed to be inclined at the predetermined angle from the plurality of first electrode connection portions.

13. The battery pack according to claim 3,
wherein at least one of the plurality of first electrode connection portions and the plurality of second electrode connection portions has a bent structure.

14. The battery pack according to claim 3,
wherein the plurality of first electrode connection portions are formed by bending once from the bus bar body.

15. The battery pack according to claim 13,
wherein a bending angle of the bent structure is 90 degrees.

16. A vehicle comprising at least one battery pack according to any one of claims 1 to 15.
